# EUROPEAN PATENT APPLICATION

(11) **EP 0 904 908 A1**
(43) Date of publication of application: **31.03.1999**
(21) Application number: 98307591.2
(22) Date of filing: 18.09.1998
(51) Int. Cl.: B29B 9/08, B30B 11/20

(54) **Method for making thermoplastic resin pellets**

(30) Priority: 26.09.1997 US 938643
(71) Applicant: GENERAL ELECTRIC COMPANY, Schenectady, NY 12345 (US)
(72) Inventor: Dekkers, Theodorus Adrianus Maria, Steenbergen (NL); Gerritsen, Jan Cornelis, 1633 HD Avenhorn (NL); Ruijgrok, Pieter Marcus Koenra, 1628 WL Hoorn (NL); Bokstijn, Kjeld Pelle Jarl, 1062 CZ Amsterdam (NL); Van Eijk, Peter, 4623 AR Bergen op Zoom (NL)
(74) Representative: Szary, Anne Catherine, Dr.

(57) **Abstract**

A method processing a thermoplastic resin includes the steps of compressing first particles of the thermoplastic resin at a temperature effective to soften the particles so that the particles partially fuse to form an aggregate of the particles and dividing the aggregate into second particles of the thermoplastic resin and allows particulate thermoplastic resin to be compacted and pelletized at reduced cost with reduced risk of thermal degradation of the thermoplastic resin.

## Description

The present invention pertain to methods for processing thermoplastic resins, more specifically to a method for compounding thermoplastic resins and providing a thermoplastic resin composition in the form of pellets.

It is often desirable to combine a thermoplastic resin with other components or to convert a thermoplastic resin that is made in one form to another form for more convenient use in molding operations. For example, thermoplastic resin that is made in the form of a powder may be combined with other components and converted into pellets to provide a thermoplastic resin composition in a form that is convenient to handle and to use in molding operations. Conventional compounding techniques using, for example, an extruder or a compounder such as a Banbury-type mixer, typically consume large amounts of energy and may subject the thermoplastic resin to localized regions of elevated temperature sufficient to result in thermal degradation of the thermoplastic resin. In an extreme case, the exposure to elevated temperature can result in localized carbonization of the thermoplastic resin, manifested as black particulate contamination visible in the thermoplastic resin pellets produced by such a process.

### Summary of the Invention

The present invention is directed to a method for processing a thermoplastic resin, comprising compressing first particles of the thermoplastic resin at a temperature effective to soften the particles so that the particles partially fuse to form an aggregate of the particles and dividing the aggregate into second particles of the thermoplastic resin.

The method of the present invention allows particulate thermoplastic resin to be compounded with other components, compacted and pelletized at greatly reduced cost with greatly reduced risk of thermal degradation of the thermoplastic resin.

### Brief Description of the Drawings

Figure 1 shows schematic drawings of several devices for conducting press-extrusion processing of thermoplastic resin compositions:
Figure 1 (a) shows a schematic transverse cross sectional view of a mill with a flat perforated screen;
Figure 1 (b) shows a schematic transverse cross sectional view of a two roll press extrusion device with perforated rolls;
Figure 1 (c) shows a schematic transverse cross sectional view of a perforated mold with an internal roll;
Figure 1 (d) shows a schematic transverse cross sectional view of a perforated mold and an external mill; and
Figure 1 (e) shows a schematic transverse cross sectional view of a gear wheel type device.

Figure 2 shows a schematic, partially cut away side view of a press-extrusion apparatus.

Figure 3 shows a schematic transverse cross sectional view of the mold (100) shown in Figure 2.

Figure 4 shows a longitudinal cross sectional view taken along line 4 - 4 in Figure 3.

### Detailed Description of the Invention

In a highly preferred embodiment, the first thermoplastic resin particles are of a particle size, as determined by sieve analysis, of up to about 4.0 millimeters ("mm"), more preferably up to about 2.0 mm and still more preferably from about 0.06 mm to about 1.0 mm. In a highly preferred embodiment, the first thermoplastic resin particles are in the form of a powder.

In a preferred embodiment, the second thermoplastic resin particles are of a particle size that is characterized by longitudinal dimension, for example, a length, of from about 1 mm to about 6 mm, more preferably from about 2 mm to about 5 mm, and a transverse dimension, for example, a diameter, of from about 1 mm to about 5 mm, more preferably from about 2 mm to about 4 mm. In a highly preferred embodiment, the second thermoplastic resin particles are in the form of pellets, more preferably in the form of substantially cylindrical pellets.

The step of compressing the first particles of the thermoplastic resin is conducted at a temperature effective to provide a sintering effect such that the first particles soften and partially fuse to form an aggregate of the first particles and, preferably, the second particles formed from the aggregate exhibit good physical integrity.

In a preferred embodiment, compression of the first particles of thermoplastic resin is carried out at a temperature that is greater than or equal to the Vicat softening temperature of the thermoplastic resin. As referred to herein the terminology "Vicat softening temperature" of a resin refers to the softening temperature of the thermoplastic resin as determined according to ISO 306/B50. In a more highly preferred embodiment, the compression is carried out at a temperature ranging from the Vicat softening temperature of the thermoplastic resin up to about 70°C above the Vicat softening temperature of the thermoplastic resin. More preferably, the compression is carried out at a temperature ranging from about 5 to about 50°C above, still more preferably from about 10 to about 30°C above, the Vicat softening temperature of the thermoplastic resin.

In contrast, conventional extrusion and compounding techniques are melt processes that are conducted at temperatures that may range from 70 to 160°C above the Vicat softening temperature of the thermoplastic resin.

In a preferred embodiment the first particles are combined, prior to the step of compressing, with a second component, such as for example, one or more of the additives set forth below, and the second component is thereby incorporated into the aggregate and into the second particles.

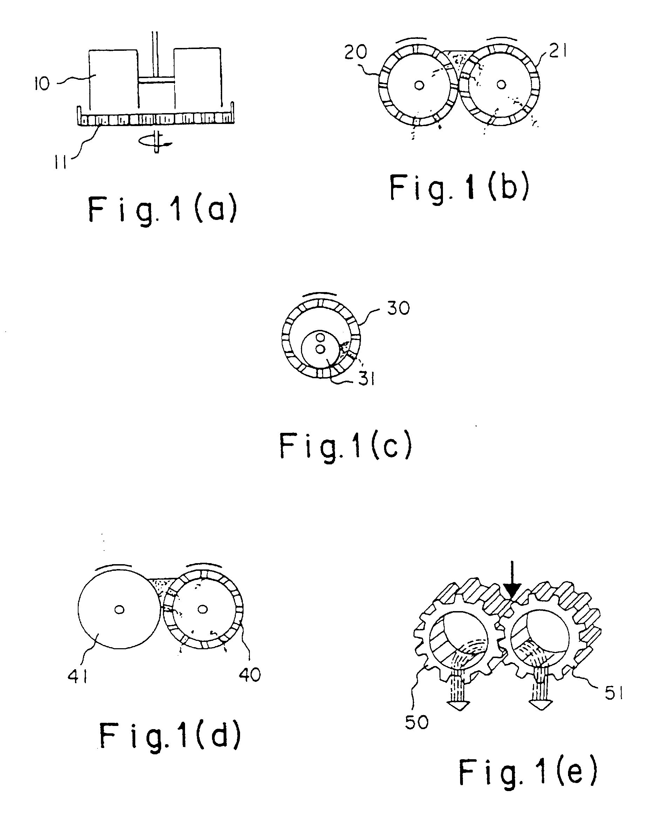

In a preferred embodiment of the method of the present invention, the thermoplastic resin is processed by a "press-extrusion" technique wherein first particles of the resin are compressed against a perforated mold and extruded through the perforations of the mold. Several equipment configurations may be used to carry out the press-extrusion technique. Schematic drawing of several examples of suitable equipment are shown in Figure 1.

Referring to Fig. 1(a), compression between a rotating mill (10) and a flat perforated mold (11) with axial extrusion of the resin through the perforations of the flat perforated mold (11).

Referring to Fig. 1(b), compression between the rolls (20, 21) of a two roll mill, wherein one or both of the rolls is hollow, with radially inward extrusion of the resin through the perforations into the perforated roll(s) (20, 21) and discharge of the extruded resin from the interior of the perforated roll(s) (20, 21).

Referring to Fig. 1(c), compression of the resin between a cylindrical perforated mold (30) and an internal mill (31), with radially outward extrusion of the resin through the perforations of the cylindrical mold (30).

Referring to Fig. 1(d), compression of the resin between a cylindrical perforated mold (40) and an external mill (41), with radially inward extrusion of the resin through the perforations of the cylindrical mold (40).

Referring to Fig. 1(e), compression between two intermeshed gear wheels (50, 51), wherein one or both of the gear wheels (50, 51) is hollow, with radially inward extrusion of the resin through the perforations into the perforated gear wheel(s) (50, 51) and discharge of the extruded resin from the interior of the perforated wheel(s) (50, 51).

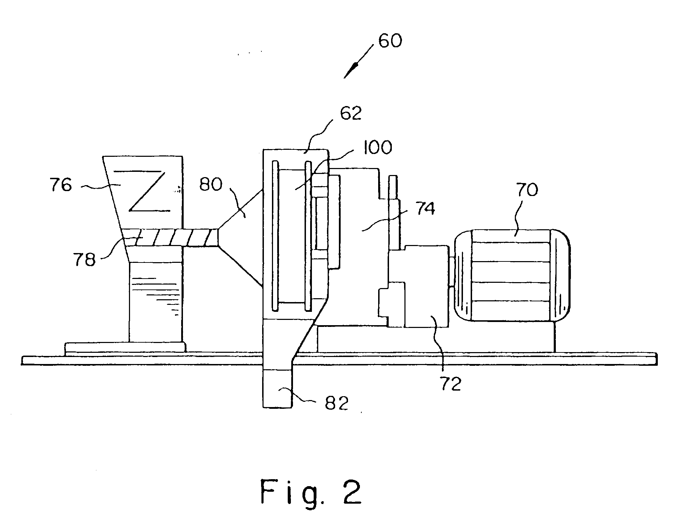

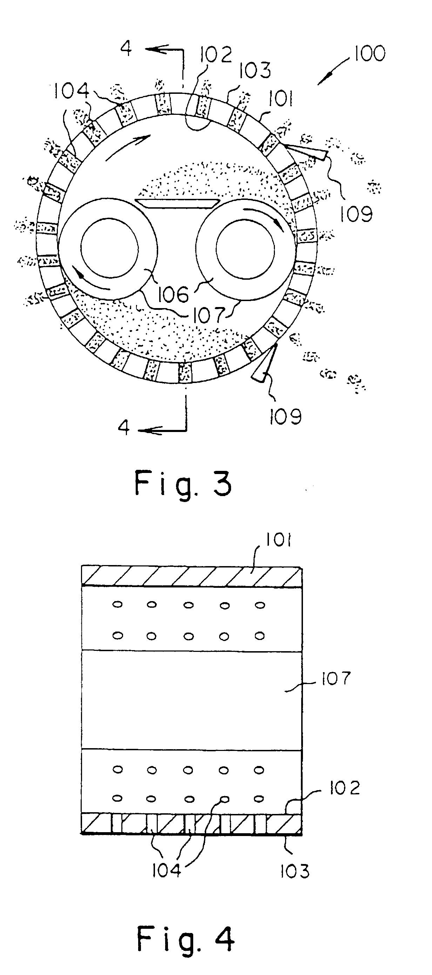

In a preferred embodiment, the compression of the resin is carried out in an apparatus of the type shown in Fig.1(c). Referring now to Figures 2, 3 and 4, the apparatus (60) includes a housing (62). Rotatably mounted within the housing (62) is a mold (100) comprising a cylindrical wall (101) extending along a longitudinal axis, said wall having an inner surface (102), having an outer surface (103) radially spaced apart from the inner surface (102) and having one or more radially oriented passages or perforations (104) communicating between the inner and outer surfaces (102, 103). The apparatus further includes a motor (70), power coupling (72) and gear train (74) operably connected with the mold (100) for rotating the mold (100) about its longitudinal axis and a hopper (76), screw conveyor (78) and feed chute (80) for introducing thermoplastic resin particles into the mold (100). The apparatus further includes one or more cylindrical mills (106), each mill (106) extending along a respective longitudinal axis and having a respective cylindrical outer surface (107), wherein each mill (106) is axially aligned with and rotatably mounted within the mold (100) with the outer surface (107) of the mill (106) in close proximity to, preferably at a distance of from about 0 mm to about 2 mm from, the inner surface (102) of cylindrical wall (101) of the mold (100). The motor (70), power coupling (72) and gear train (74) are operably connected with the one or more mills (106) for rotating each mill (106) about its own axis. Resin particles are compressed between the outer surfaces (107) of the mills (106) and the inner surface (102) of the wall (101) of the mold (100) and extruded in a radially outward direction through the one or more passages (104) defined in the mold wall (101) into the housing (62) to form an agglomerate of the resin particles. A discharge chute (82) is provided for discharging extruded resin from the housing (62).

In a preferred embodiment, the radial passages (104) are each defined by a respective substantially continuous cylindrical surface having an inner diameter ("D") of from 1 to 10 mm, more preferably from 2 to 4 mm, and extending along a respective longitudinal axis for a length ("L"), corresponding to the thickness of cylindrical wall (101), of from 10 to 100 mm, more preferably from 30 to 70 mm, wherein the respective longitudinal axes of the radial passages are each oriented radially relative to the longitudinal axis of the cylindrical wall (101).

The ratio of L to D for the radial passages (104) of mold (100) is determined separately for each thermoplastic resin in order to obtain an extrudate temperature within the desired range. In a preferred embodiment, the ratio of L to D for the radial passages (104) is from 5 to 50, more preferably from 10 to 30, even more preferably 10 to 20. Typically, the extrudate temperature is from 10 to 40°C above the Vicat softening temperature.

In a preferred embodiment, the thermoplastic resin is extruded at a rate of up to 17, more preferably from 2 to 17, even more preferably from 2 to 10, kilograms of thermoplastic resin per square meter of transverse cross sectional area of radial passages (104) per second ("kg/m²s"), wherein the "transverse cross sectional area" means the cumulative area of the openings defined by the radial passages (104) of the mold (100), measured perpendicular to the radially oriented longitudinal axes of the respective passages. For example, the transverse cross sectional area of the radial passages through a mold having n radial passages, each defined by respective substantially continuous cylindrical surface having an inner diameter of D, is n·π(D/2)².

In a highly preferred embodiment, one or more knives (109) are positioned at the outer surface (103) of the cylindrical wall (101) to chop the resin extrudate into pellets as the extrudate exits the radially passages (104) through the cylindrical wall (101). The knives (109) are circumferentially spaced apart around the outer surface (103) of the cylindrical wall (101) of the mold (100). The dimensions of the extruded resin pellets are determined by the combined influences of knife configuration, the dimensions of the radial passages (104) and extrusion rate.

Compacting machinery of the type shown in Figures 1(c), 2, 3 and 4 that is suitable for conducting the compressing step of the present is commonly used in food processing and is commercially available from a number of sources, such as, for example, pelletizing presses sold by Universal Milling Technology of Boxtel, NL.

In a preferred embodiment, the pellets are discharged from the compactor onto a vibrating screen to agitate the pellets while the pellets are allowed to cool to a temperature below their Vicat softening temperature. Agitation during cooling prevents the formation of lumps or aggregates of the pellets and allows separation of non-compacted fine particles from the pellets. The fine particles can subsequently be recirculated to the compactor.

In a highly preferred embodiment, the resin pellets are actively cooled using a heat exchange device, such as for example, a counter current air cooled heat exchanger, known as a "Bunkercooler NBK 19/24" available from Universal Milling Technology, Boxtel, The Netherlands.

The compacting method of the present invention is applicable to any thermoplastic resin having a Vicat softening temperature of from about 50°C to about 250 °C, more preferably from about 50°C to about 200 °C. Suitable thermoplastic resins include, for example, (i) rubber modified thermoplastic resins and styrenic resins, (ii) polycarbonate resins, (iii) polyester reins and (iv) polyphenylene ether resins, (v) polyamide resins, as well as (vi) blends of two or more of such resins.

### (i) Rubber Modified Thermoplastic Resin

In a highly preferred embodiment, the thermoplastic resin is a rubber modified thermoplastic resin.

As used herein, the terminology "rubber modified thermoplastic resin" means a thermoplastic resin composition that comprises a discontinuous elastomeric phase dispersed in a continuous rigid thermoplastic phase, wherein at least a portion of the rigid thermoplastic phase is chemically grafted to the elastomeric phase. In a preferred embodiment, the rubber modified thermoplastic resin comprises from 5 to 50 parts by weight ("pbw"), more preferably 5 to 35 pbw, still more preferably 10 to 25 pbw, of the elastomeric phase and from 50 to 95 pbw, more preferably 65 to 95 pbw, still more preferably 75 to 90 pbw, of the rigid thermoplastic phase.

### (a) Elastomeric Phase

Suitable materials for use as the elastomeric phase are polymers having a glass transition temperature ("T_{g}") of less than or equal to 25°C, more preferably less than or equal to 0 °C, and still more preferably less than or equal to -30°C. As referred to herein, the T_{g} of a polymer is measured by differential scanning calorimetry at a heating rate 20 °C/ minute with the T_{g} value determined at inflection point.

In a preferred embodiment, the elastomeric phase comprises a polymer having structural units derived from one or more monoethylenically unsaturated monomers selected from conjugated diene monomers, non-conjugated diene monomers and (C₁-C₁₂) alkyl (meth)acrylate monomers.

Suitable conjugated diene monomers include, for example, 1,3-butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, dichlorobutadiene, bromobutadiene and dibromobutadiene as well as mixtures of conjugated diene monomers. In a preferred embodiment, the conjugated diene monomer is 1,3-butadiene.

Suitable non-conjugated diene monomers include, for example, ethylidene norbornene, dicyclopentadiene, hexadiene or phenyl norbornene.

As used herein, the term "(C₁-C₁₂)alkyl" means a straight or branched alkyl substituent group having from 1 to 12 carbon atoms per group and includes, for example, methyl, ethyl, n-butyl, sec-butyl, t-butyl, n-propyl, iso-propyl, pentyl, hexyl, heptyl, octyl, nonyl, decyl, undecyl and dodecyl, and the terminology "(meth)acrylate monomers" refers collectively to acrylate monomers and methacrylate monomers. Suitable (C₁-C₁₂)alkyl (meth)acrylate monomers include (C₁-C₁₂)alkyl acrylate monomers such as, for example, ethyl acrylate, butyl acrylate, iso-pentyl acrylate, n-hexyl acrylate, 2-ethyl hexyl acrylate, and their (C₁-C₁₂)alkyl methacrylate analogs such as, for example, methyl methacrylate, ethyl methacrylate, propyl methacrylate, iso-propyl methacrylate, butyl methacrylate, hexyl methacrylate, decyl methacrylate.

In a preferred embodiment, the elastomeric phase comprises a polymer having first structural units derived from one or more monomers selected from conjugated diene monomers, non-conjugated diene monomers and (C₁-C₁₂) alkyl (meth)acrylate monomers and second structural units derived from one or more monoethylenically unsaturated monomers selected from vinyl aromatic monomers, monoethylenically unsaturated nitrile monomers and (C₂-C₈)olefin monomers. Suitable conjugated diene monomers, non-conjugated diene monomers and (C₁-C₁₂) alkyl (meth)acrylate monomers are disclosed above.

Suitable vinyl aromatic monomers include, for example, styrene and substituted styrenes having one or more alkyl, alkoxyl, hydroxyl or halo substituent group attached to the aromatic ring, including, for example, α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, for example, vinyl naphthalene, vinyl anthracene, as well as mixtures of vinyl aromatic monomers.

As used herein, the term "monoethylenically unsaturated nitrile monomer" means an acyclic compound that includes a single nitrile group per molecule and a single site of ethylenic unsaturation per molecule and includes, for example, acrylonitrile, methacrylonitrile, α-chloro acrylonitrile, fumaronitrile.

As used herein, the term "(C₂-C₈)olefin monomers" means a compound having from 2 to 8 carbon atoms per molecule and having a single site of ethylenic unsaturation per molecule. Suitable (C₂-C₈)olefin monomers include, for example, ethylene, propene, 1-butene, 1-pentene, heptene.

In a preferred embodiment, the elastomeric phase comprises from 60 to 100 percent by weight ("wt%") first structural units derived from one or more conjugated diene monomers and from 0 to 40 wt% second structural units derived from one or more monomers selected from vinyl aromatic monomers and monoethylenically unsaturated nitrile monomers, such as, for example, a butadiene homopolymer, a styrene-butadiene copolymer, an acrylonitrile-butadiene copolymer or a styrene-butadiene-acrylonitrile copolymer.

In an alternative preferred embodiment, the elastomeric phase comprises structural units derived from one or more (C₁-C₁₂)alkyl acrylate monomers. In a more highly preferred embodiment, the rubbery polymeric substrate comprises from 40 to 100 wt% structural units derived from one or more (C₁-C₁₂)alkyl acrylate monomers, more preferably from one or more monomers selected from ethyl acrylate, butyl acrylate and n-hexyl acrylate.

The elastomeric phase may, optionally, further comprise a minor amount, for example, up to 5 wt% of structural units derived from a polyethylenically unsaturated "crosslinking" monomer, for example, butylene diacrylate, divinyl benzene, butene diol dimethacrylate, trimethylolpropane tri(meth)acrylate. As used herein, the term "polyethylenically unsaturated" means having two or more sites of ethylenic unsaturation per molecule.

The elastomeric phase may, particularly in those embodiments wherein the structural units of the elastomeric phase are derived from alkyl (meth)acrylate monomers, further comprise a minor amount, for example, up to 5 wt%, of structural units derived from a polyethylenically unsaturated "graftlinking" monomer. Suitable graftlinking monomers include those monomers having a first site of ethylenic unsaturation with a reactivity similar to that of the monoethylenically unsaturated monomers from which the respective substrate or superstrate is derived and a second site of ethylenic unsaturation with a relative reactivity that is substantially different from that of the monoethylenically unsaturated monomers from which the elastomeric phase is derived so that the first site reacts during synthesis of the elastomeric phase and the second site is available for later reaction under different reaction conditions, for example, during synthesis of the rigid thermoplastic phase. Suitable graftlinking monomers include, for example, allyl methacrylate, diallyl maleate, triallyl cyanurate.

In a preferred embodiment, the elastomeric phase is made by aqueous emulsion polymerization in the presence of a free radical initiator, for example, an azonitrile initiator, an organic peroxide initiator, a persulfate initiator or a redox initiator system, and, optionally, in the presence of a chain transfer agent, for example, an alkyl mercaptan and coagulated to form particles of elastomeric phase material. In a preferred embodiment, the emulsion polymerized particles of elastomeric phase material have a weight average particle size of 50 to 800 nanometers ("nm"), more preferably, of from 100 to 500 nm, as measured by light transmission. The size of emulsion polymerized elastomeric particles may optionally be increased by mechanical or chemical agglomeration of the emulsion polymerized particles, according to known techniques.

### (b) Rigid Thermoplastic Phase

The rigid thermoplastic resin phase comprises one or more thermoplastic polymers and exhibits a T_{g} of greater than 25°C, preferably greater than or equal to 90°C and even more preferably greater than or equal to 100°C.

In a preferred embodiment, the rigid thermoplastic phase comprises a polymer or a mixture of two or more polymers each having structural units derived from one or more monomers selected from the group consisting of (C₁-C₁₂)alkyl (meth)acrylate monomers, vinyl aromatic monomers and monoethylenically unsaturated nitrile monomers. Suitable (C₁-C₁₂)alkyl (meth)acrylate monomers, vinyl aromatic monomers and monoethylenically unsaturated nitrile monomers are those set forth above in the description of the elastomeric phase.

In a highly preferred embodiment, rigid thermoplastic phase comprises one or more vinyl aromatic polymers. Suitable vinyl aromatic polymers are those comprising at least 50 wt% structural units derived from one or more vinyl aromatic monomers.

In a preferred embodiment, the rigid thermoplastic resin phase comprises a vinyl aromatic polymer having first structural units derived from one or more vinyl aromatic monomers and having second structural units derived from one or more monoethylenically unsaturated nitrile monomers.

The rigid thermoplastic phase is made according to known processes, for example, mass polymerization, emulsion polymerization, suspension polymerization or combinations thereof, wherein at least a portion of the rigid thermoplastic phase is chemically bonded, i.e., "grafted" to the elastomeric phase via reaction with unsaturated sites present in the elastomeric phase. The unsaturated sites in the elastomeric phase are provided, for example, by residual unsaturated sites in structural units derived from a conjugated diene or by residual unsaturated sites in structural units derived from a graftlinking monomer.

In a preferred embodiment, at least a portion of the rigid thermoplastic phase is made by an aqueous emulsion or aqueous suspension polymerization reaction in the presence of elastomeric phase and a polymerization initiator system, for example, a thermal or redox initiator system.

In an alternative preferred embodiment, at least a portion of the thermoplastic phase is made by a mass polymerization process, wherein the particles of the material from which the elastomeric phase is to be formed are dissolved in a mixture of the monomers from which the rigid thermoplastic phase is to be formed and the monomers of the mixture are then polymerized to form the rubber modified thermoplastic resin.

The amount of grafting that takes place between the rigid thermoplastic phase and the elastomeric phase varies with the relative amount and composition of the elastomeric phase. In a preferred embodiment, from 10 to 90 wt%, preferably from 25 to 60 wt%, of the rigid thermoplastic phase is chemically grafted to the elastomeric phase and from 10 to 90 wt%, preferably from 40 to 75 wt% of the rigid thermoplastic phase remains "free", that is, non-grafted.

The rigid thermoplastic phase of the rubber modified thermoplastic resin may be formed solely by polymerization carried out in the presence of the elastomeric phase or by addition of one or more separately polymerized rigid thermoplastic polymers to a rigid thermoplastic polymer that has been polymerized in the presence of the elastomeric phase.

In a preferred embodiment, the nongrafted portion of the rigid thermoplastic phase exhibits a weight average molecular weight in the range of 10,000 to 200,000, as determined by gel permeation chromatography relative to polystyrene.

In a preferred embodiment, the rubber modified thermoplastic resin comprises an elastomeric phase comprising a polymer having structural units derived from one or more conjugated diene monomers and, optionally, further comprising structural units derived from one or more monomers selected from vinyl aromatic monomers and monoethylenically unsaturated nitrile monomers, and the rigid thermoplastic phase comprises a polymer comprising structural units derived from one or more monomers selected from vinyl aromatic monomers and monoethylenically unsaturated nitrile monomers.

In a preferred embodiment, the rigid thermoplastic resin phase is a polymer or mixture of polymers comprising from 45 to 90 wt% structural units derived from styrene and from 10 to 55 wt% structural units derived from acrylonitrile.

Each of the polymers of the elastomeric phase and of the rigid thermoplastic resin phase of the rubber modified thermoplastic resin may, provided that the T_{g} limitation for the respective phase is satisfied, optionally further comprise up to 10 wt% of third structural units derived from one or more other copolymerizable monomers such as, for example, monoethylenically unsaturated carboxylic acids such as, for example, acrylic acid, methacrylic acid, itaconic acid, hydroxy(C₁-C₁₂)alkyl (meth)acrylate monomers such as, for example, hydroxyethyl methacrylate; (C₄-C₁₂)cycloalkyl (meth)acrylate monomers such as, for example, cyclohexyl methacrylate; (meth)acrylamide monomers such, for example as, acrylamide and methacrylamide; maleimide monomers such as, for example, N-alkyl maleimides, N-aryl maleimides, maleic anhydride, vinyl esters such as, for example, vinyl acetate and vinyl propionate. As used herein, the term "(C₄-C₁₂)cycloalkyl" means a cyclic alkyl substituent group having from 4 to 12 carbon atoms per group and the term "(meth)acrylamide" refers collectively to acrylamides and methacrylamides

In a first highly preferred embodiment, the rigid polymeric phase comprises repeating units derived from one or more conjugated diene monomers, and may, optionally, further comprise repeating units derived from one or more monomers selected from vinyl aromatic monomers and monoethylenically unsaturated nitrile monomers, and the phase comprises repeating units derived from one or more monomers selected from vinyl aromatic monomers and monoethylenically unsaturated nitrile monomers, such as for example, acrylonitrile-butadiene-styrene ("ABS") graft copolymers. Suitable ABS-type graft copolymers are commercially available, such as, for example, Cycolac™ resins from General Electric Company.

In a second highly preferred embodiment, the phase comprises repeating units derived from one or more (C₁-C₁₂)alkyl acrylates and the phase comprises repeating units derived from one or more monomers selected from vinyl aromatic monomers and monoethylenically unsaturated nitrile monomers, such as for example, acrylonitrile-styrene-acrylate ("ASA") graft copolymers. Suitable ASA-type graft copolymers are available, such as, for example, Geloy™ resins from General Electric Company.

### (ii) Aromatic Polycarbonate Resins

Aromatic polycarbonate resins suitable for use in the present invention, methods of making aromatic polycarbonate resins and the use of aromatic polycarbonate resins in thermoplastic molding compounds are well known in the art, see, generally, U.S Patent No. 5,411,999, the disclosure of which is incorporated herein by reference.

Aromatic polycarbonate resins are generally prepared by reacting a dihydric phenol, for example, 2, 2-bis-(4-hydroxyphenyl) propane ("bisphenol A"), 2,2-bis(3,5-dimethyl-4-hydroxyphenyl)propane, bis(2-hydroxyphenyl) methane, 2,6-dihydroxy naphthalene, hydroquinone, 2,4'-dihydroxyphenyl sulfone and 4, 4'-dihydroxy-3, 3-dichlorophenyl ether, with a carbonate precursor, for example, carbonyl bromide and carbonyl chloride, a halogen formate, a bishaloformate of a dihydric phenol, or a carbonate ester, for example, diphenyl carbonate, dichlorophenyl carbonate, dinaphthyl carbonate, phenyl tolyl carbonate and ditolyl carbonate.

Suitable aromatic polycarbonate resins include linear aromatic polycarbonate resins, branched aromatic polycarbonate resins, and poly(ester-carbonate) resins.

Suitable linear aromatic polycarbonates resins include, for example, bisphenol A polycarbonate resin.

Suitable branched aromatic polycarbonates are made, for example, by reacting a polyfunctional aromatic compound, for example, trimellitic anhydride, trimellitic acid, trimesic acid, trihydroxy phenyl ethane trimellityl trichloride, with a dihydric phenol and a carbonate precursor to form a branching polymer.

Suitable poly(ester-carbonate) copolymers are made, for example, by reacting a difunctional carboxylic acid, terephthalic acid, 2,6-naphthalic acid, or a derivative of a difunctional carboxylic acid, for example, an acid chloride, with a dihydric phenol and a carbonate precursor.

Suitable aromatic polycarbonate resins are commercially available, such as, for example, Lexan™ polycarbonate resins from General Electric Company.

### (iii) Polyester Resins

Polyester resins suitable for use in the present invention, methods for making polyester resins and the use of polyester resins in thermoplastic molding compositions are well known in the art, see, generally, U.S. Patent No. 5,411,999.

Suitable polyester resins include linear polyester resins, branched polyester resins, copolymeric polyester resins and mixtures or blends thereof. Suitable linear polyester resins include, for example, poly(alkylene phthalate)s such as, for example, poly(ethylene terephthalate) ("PET"), poly(butylene terephthalate) ("PBT"), poly(propylene terephthalate) ("PPT"), poly(cycloalkylene phthalate)s such as, for example, poly(cyclohexanedimethanol terephthalate) ("PCT"), poly(alkylene naphthalate)s such as, for example, poly(butylene-2,6-naphthalate) ("PBN") and poly(ethylene-2,6-naphthalate) ("PEN"), poly(alkylene dicarboxylates) such as, for example, poly(cyclohexane dicarboxylate) Suitable copolymeric polyester resins include, for example, polyesteramide copolymers, cyclohexanedimethanol-terephthalic acid-isophthalic acid copolymers and cyclohexanedimethanol-terephthalic acid-ethylene glycol ("PETG") copolymers.

Suitable polyester resins are commercially available, such as, for example, Valox™ polyester resins from General Electric Company.

### (iv) Polyphenylene Ether Resins

The polyphenylene ethers (PPE) resins employed in the present invention are known polymers comprising a plurality of structural units of the formula (1) 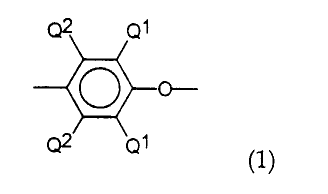 wherein in each structural unit independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE resins are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE resins containing moieties prepared by grafting vinyl monomers or polymers such as polystyrenes and elastomers, as well as coupled PPE resins in which coupling agents such as low molecular weight polycarbonates, quinones, heterocycles and formulas undergo reaction in known manner with the hydroxy groups of two PPE resin chains to produce a higher molecular weight polymer, provided a substantial proportion of free OH groups remains.

The PPE resins are typically prepared by the oxidative coupling of at least one mono hydroxy aromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Suitable PPE resins are commercially available, such as, for example, Noryl™ polyphenylene ether resins from General Electric Company.

### (v)Polyamide resins

Suitable polyamide resins include linear aliphatic polyamide homopolymers or copolymers. In a preferred embodiment, the polyamide is one or more aliphatic linear polyamide homopolymer resin selected from nylon resins. Suitable nylon resins include, for example, nylon 6, nylon 4,6, nylon 6,6, nylon 6,9, nylon 6,10, nylon 6,12 and nylon 12,12 resins. Suitable polyamide resins are commercially available.

### (vi) Thermoplastic resin Blends

Blends of thermoplastic resins, such as, for example, blends of the above- discussed thermoplastic resins, are also suitable for use as the first thermoplastic resin particles in the method of the present invention.

In a preferred embodiment, the thermoplastic resin is a blend of one or more polycarbonate resins with one or more polyester resins, more preferably a blend of from 10 pbw to 80 pbw of a polycarbonate resin with from 20 pbw to 90 pbw of a polyester resin. In a more highly preferred embodiment, the polycarbonate resin is a bisphenol A-type polycarbonate resin and the polyester resin is a poly(butylene terephthalate) resin or a poly(ethylene terephthalate) resin.

Suitable polycarbonate resin-polyester resin blends are commercially available, such as, for example, XENOY™ resins from General Electric Company

In an alternative preferred embodiment, the thermoplastic resin is a blend of one or more polycarbonate resins with one or more ABS resins, more preferably a blend of from 66 pbw to 99 pbw of a polycarbonate resin with from 1 pbw to 40 pbw of an ABS resin. In a more highly preferred embodiment, the polycarbonate resin is a bisphenol A polycarbonate resin.

Suitable polycarbonate resin-ABS resin blends are commercially available, such as, for example, Cycoloy™ resins from General Electric Company.

### Additives

The first particles of the thermoplastic resin may, optionally, be combined with minor amounts, one or more of the conventional additives, such as, for example:
(1) antioxidants and stabilizers, such as, for example, organophosphites, for example, tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, for example, butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, for example, distearylthiopropionate, dilaurylthiopropionate, ditridecylthiodipropionate, amides of beta-(3,5-di-tert-butyl-4-hydroxyphenol)-propionic acid;
(2) UV absorbers and light stabilizers such as, for example, (i) 2-(2'-hydroxyphenyl)-benzotriazoles, 2-hydroxy-benzophenones; (ii) esters of substituted and unsubstituted benzoic acids, (iii) acrylates, (iv) nickel compounds;
(3) metal deactivators, such as, for example, N,N'-diphenyloxalic acid diamide, 3-salicyloylamino-1,2,4-triazole;
(4) peroxide scavengers, such as, for example, (C₁₀-C₂₀)alkyl esters of β-thiodipropionic acid, mercapto benzimidazole;
(5) basic co-stabilizers, such as, for example, melamine, polyvinylpyrrolidone,; urea derivatives, hydrazine derivatives; amines, polyamides, polyurethanes;
(6) sterically hindered amines such as, for example, triisopropanol amine or the reaction product of 2,4-dichloro-6-(4-morpholinyl)-1,3,5-triazine with a polymer of 1,6-diamine, N, N'-bis(-2,2,4,6-tetramethyl-4-piperidenyl) hexane;
(7) neutralizers such as magnesium stearate, magnesium oxide, zinc oxide, zinc stearate, hydrotalcite;
(8) fillers and reinforcing agents, such as, for example, silicates, TiO_{2,} glass fibers, carbon black, graphite, calcium carbonate, talc, mica;
(9) other additives such as, for example, lubricants such as , for example, pentaerythritol tetrastearate, EBS wax, silicone fluids, plasticizers, optical brighteners, pigments, dyes, colorants, flameproofing agents; anti-static agents; blowing agents;
(10) flame retardant additives such as, for example, halogen-containing organic flame retardant compounds, organophosphate flame retardant compounds and borate flame retardant compounds.

The method of the present invention allows processing of the thermoplastic resin at relatively low temperatures and thereby avoids the risk of thermal degradation of the thermoplastic resin or promotion of chemical reaction among the components of a thermoplastic resin composition during processing.

Rubber modified thermoplastic resin having a rubber content of greater than about 35 wt% typically cannot be processed in an extruder or mixer due to heat buildup within the resin and associated thermal degradation of the resin during processing. In an extreme case, this can result in marked discoloration of the resin. In contrast, the method of the present invention can be used to make pellets of rubber modified thermoplastic resin having a relatively high rubber content, such as, for example up to 80 wt% rubber.

Typical extruder-based and mixer-based compounding techniques may result in localized regions of elevated temperature, such for example, along the surface of an extruder screw, that may result in localized thermal degradation of the thermoplastic resin during processing. In an extreme case, the localized thermal degradation can result in localized carbonization of the thermoplastic resin, manifested as black particulate contamination visible in the thermoplastic resin pellets so produced. In contrast, the relatively low processing temperatures used in the method of the present invention greatly reduce the risk of thermal degradation of the thermoplastic resin during processing and the associated contamination of the thermoplastic resin pellets with degradation products.

The melt processing temperatures used in typical extruder-based or compounder-based compounding processes can promote undesirable chemical reactions among the components of the thermoplastic resin composition, such as, for example, molecular weight increase. In contrast, the relatively low processing temperatures encountered in the method of the present invention are much less likely to promote undesirable chemical reactions among the components of the thermoplastic resin composition.

### Examples 1-4 and Comparative Examples C1-C4

The method of the present invention was used to form pellets of several ABS-type rubber modified thermoplastic resin compositions and the results were compared to those obtained using a conventional compounding technique.

The following materials were used as components of the thermoplastic resin compositions:
- ABS1: ABS graft copolymer (12 wt% acrylonitrile/36wt% styrene/52 wt % polybutadiene)
- AMSAN: AMSAN copolymer (30 wt% acrylonitrile/67wt% α-methylstyrene /3 wt % styrene)
- ABS2: ABS graft copolymer (29 wt% acrylonitrile/51wt% styrene/20 wt % polybutadiene)
- ABS3: blend of ABS graft copolymer (12 wt% acrylonitrile/27 wt% styrene /61 wt % butadiene) and AMSAN copolymer (30 wt% acrylonitrile /67wt% α-methylstyrene/3 wt % styrene)
- SAN: SAN copolymer (28 wt% acrylonitrile, 72 wt% styrene)

The relative composition of thermoplastic resin compositions A-D are set forth below in TABLE I.

**TABLE I**

| | A | B | C | D |
|---|---|---|---|---|
| ABS1 | 25 | 30 | _ | 7 |
| AMSAN | 75 | 70 | _ | -- |
| ABS2 | -- | -- | 100 | -- |
| ABS3 | -- | -- | -- | 75 |
| SAN | -- | -- | -- | 18 |
| Additives | 1.7 | 1.7 | 1.2 | 1.7 |

Samples of the thermoplastic resin compositions A-D in powder form were made into pellets by (i) a conventional process of compounding each of the compositions using a 1.3 liter Farrel Pomini compounder and then dicing the compounded compositions to form pellets, or, alternatively, (ii) by compacting each of the compositions according to the process of the present invention using a press extrusion machine, model V3-30C made by Universal Milling Technology, Boxtel, NL. The press extrusion machine was of the general design shown in Figures 1(c), 2, 3 and 4, which included a rotating mold, with two internal mills which press the material being processed radially outwardly through perforations in the mold. The molds used had holes with the following dimensions:

| | |
|---|---|
| Mold#1 | L = 50 mm and D = 3.0 mm, L/D = 16.667 |
| Mold#2 | L = 45 mm and D = 3.0 mm, L/D = 15.000 |

The press extrusion machine was operated at a production rate of from about 200 to 400 kilograms per hour (kg/hr), corresponding to a resin flux of from about 3.8 to about 7.5 kg/m²·s. The compaction process of the present invention produced thermoplastic resin pellets and a small residual amount, that is, less than 1 percent by weight, of non-compacted thermoplastic resin powder.

A vibrating screen was placed below the compactor to separate the pellets from non-compacted thermoplastic resin and to allow the thermoplastic resin pellets to cool. This screen has an average residence time of 15 seconds, when the pellets leave the screen the temperature of the pellets had dropped approximately 20°C.

The thermoplastic resin pellets produced were typically about 3 to 5 mm in length and about 3 mm in diameter and exhibited good integrity.

Pellets obtained through conventional processing and through the method of the present invention were then injection molded on an Arburg Allrounder 270M injection molding machine using a temperature profile as follows: zone 1: 240°C, zone 2: 245°C, zone 3: 250°C, zone 4: 245°C and mold: 70°C at an injection pressure of 1800 bar, a clamping force of 350 kiloNewtons (kN) and an injection molding speed of 20 cubic centimeters per second, to form test specimens.

The melt index of each of thermoplastic resins A-D was measured according to ISO 1133 at 220°C using a 10 kilogram weight. The Vicat softening temperature of each of thermoplastic resins A-D was measured according to ISO 306-B120. The impact strength of test specimens molded from pellets of the thermoplastic resin compositions A-D made by the conventional process and from pellets of the thermoplastic resin compositions A-D made by the press extrusion method of the present invention were each measured according to ISO 180/1A at 23°C.

The thermoplastic resin composition used, the melt index of the thermoplastic resin composition used, expressed in grams per 10 minutes, ("g/10 min"), the Vicat softening temperature of thermoplastic resin composition used, expressed in °C ("Vicat T (°C)"), the process used, that is, the above-described "Compacting" process according to the present invention or the above-described conventional "Compounding" process, the processing temperature, expressed in °C, wherein the notation ">" means greater than, the mold used, the density of the resin pellets formed, expressed as kilograms per square meter ("kg/m³") and the impact strength of test specimens molded from the thermoplastic resin pellets, expressed in kilojoules per square meter ("kJ/m²"), are each set forth below in TABLE II for each of examples 1-4 and comparative examples C1-C4.

**TABLE II**

| Ex# | Resin | Mold | Process, Temperature (°C) | Impact Strength (kJ/m²) | Melt Index (g/10 min) | Vicat T(°C) | Density (kg/m³ ) |
|---|---|---|---|---|---|---|---|
| 1 | A | 1 | Compacting, | 11.9 | 6.1 | 110 | 520 |
| | | | 120-126°C | | | | |
| C1 | A | -- | Compounding, | 12.6 | 4.5 | 111 | 513 |
| | | | >190°C | | | | |
| 2 | B | 2 | Compacting, | 18 | 5 | 112 | 520 |
| | | | 120-126°C | | | | |
| C2 | B | -- | Compounding, | 18 | 5 | 112 | 513 |
| | | | >190°C | | | | |
| 3 | C | 1 | Compacting | 28.2 | 5.7 | 98 | 504 |
| | | | 109-110°C | | | | |
| C3 | C | -- | Compounding, | 26.2 | 5.8 | 99 | 502 |
| | | | >170°C | | | | |
| 4 | D | 2 | Compacting | 10 | 6 | 110 | 550 |
| | | | 115-120°C | | | | |
| C4 | D | -- | Compounding, | 10 | 6 | 110 | 528 |
| | | | >190°C | | | | |

The results indicate that the pelletized ABS type compositions made by the press extrusion process of the present invention compare favorably with those made by conventional extrusion techniques.

### Example 5

The amount of electrical energy used to process an ABS type thermoplastic resin composition by each of three different processes , that is, (i) in a conventional compounding process (Farrel Pomini compounder, operated at a production rate of 2500 kg/hr), (ii) in a conventional extrusion process (Werner & Pflederer 30mm twin screw extruder, operated at a production rate of 600-2500 kg/hr and (iii) in a press-extrusion process of the present invention (Universal Milling Technology model V3-150C press-extrusion machine) was measured and normalized for the amount of resin processed to calculate the specific energy usage per ton of thermoplastic resin associated with each of the processes. The V3-150C press extrusion machine was operated using a mold having a total of 6528 radial passages (24 rows of 272 passages per row, each passage having dimensions of 3.0 mm diameter by 50mm) at a production rate of about 1200 kg/hr, corresponding to a resin flux of about 3.8 kg/m²s. The results of the study are set forth below in TABLE III, expressed as kiloWatt-hours per ton of thermoplastic resin composition processed ("kWh/ton").

**TABLE III**

| Process | Specific Energy Consumption (kWh/ ton) |
|---|---|
| Mixer | 456 |
| Extruder | 508 |
| Press-extrusion | 56 |

The results indicate that the press extrusion process of the present invention provides a dramatic energy savings compared to conventional compounding and extrusion processes.

### Example 6

Pigmented ABS type thermoplastic resin compositions were made by adding a black pigment (Monarch 800, Cabot Company) to an ABS type thermoplastic resin composition to form a color concentrate, mixing the concentrate using a Farrel Pomini compounder, grinding the concentrate to form a powdered color concentrate and then combining the powdered color concentrate with a powdered ABS resin composition to form a molding compound that contained about 0.5 percent by weight of the black pigment. Samples of the blended powders were then processed by a convention compounding and extrusion method or by the press-extrusion method of the present invention to form resin pellets.

Test specimens molded from pellets made by each of the respective methods exhibited identical black color by visual examination.

### Example 7

Pelletization of polyphenylene ether resin by conventional extrusion techniques typically results discoloration of the resin due to thermal degradation and in a viscosity increase due to an increase in molecular weight resulting undesired side reactions.

A sample of a polyphenylene oxide powder made by oxidative coupling of 2,6-dimethyl phenol and having a particle-size of up to 5000 micron, an intrinsic viscosity of 39.3 milliliters per gram (ml/g), a Vicat softening temperature of 195°C and a molecular weight, as measured by gel permeation chromatography, of 31,257 grams per mole (g/mol) was compacted and pelletized according to the procedure described above in Examples 1-4 at a production rate of 200 kg/hr using the V3-130C press extrusion machine (Universal Milling Technology) equipped with a mold having 3mm diameter by 35 mm long radial passages. The resin pellets exited the press extrusion machine at a temperature of 160°C.

The intrinsic viscosity of the polyphenylene oxide after compacting was 39.4 ml/g and the pellets made by the press extrusion process of the present invention exhibited good integrity and showed no discoloration or other evidence of thermal degradation.

### Example 8

Pelletization of polycarbonate resin by conventional extrusion techniques typically results in contamination of the pellets by black specks.

A sample of an aromatic polycarbonate resin derived from bisphenol A and phosgene and having an intrinsic viscosity of about 49.3 ml/g and a Vicat softening temperature of 145°C was compacted and pelletized according to the procedure described above in Examples 1-4 at a production rate of 200 kg/hr using the V3-130C press extrusion machine (Universal Milling Technology) equipped with a mold having 3mm diameter by 25 mm long radial passages to form pellets. The resin pellets so formed exited the press extrusion machine at a temperature of about 160°C.

The compacted pellets exhibited good integrity and showed no discoloration, black specks or other evidence of thermal degradation. The intrinsic viscosity of the polycarbonate resin pellets was about 49.3 ml/g.

The press extrusion process of the present invention provides a high yield of thermoplastic resin pellets at greatly reduced cost with greatly reduced risk of thermal degradation.

## Claims

1. A method for processing a thermoplastic resin, comprising compressing first particles of the thermoplastic resin at a temperature effective to soften the particles so that the particles partially fuse to form an aggregate of the particles and dividing the aggregate into second particles of the thermoplastic resin.

2. The method of claim 1, wherein the first particles are in the form of a powder and the second particles are in the form of pellets.

3. The method of claim 1, wherein the thermoplastic resin comprises one or more of rubber modified thermoplastic resins, polystyrene resins, polycarbonate resins, polyester resins, polyphenylene ether resins and polyimide resins.

4. The method of claim 1, wherein the thermoplastic resin comprises an acrylonitrile-butadiene-styrene resin or a styrene-acrylonitrile resin.

5. The method of claim 1, further comprising combining, prior to the step of compressing, the first particles with an additive selected from the group consisting of antioxidants, stabilizers, UV absorbers, light stabilizers, metal deactivators, peroxide scavengers, basic co-stabilizers, sterically hindered amines, neutralizers, fillers, reinforcing agents, lubricants, plasticizers, optical brighteners, pigments, dyes, colorants, flameproofing agents; anti-static agents; blowing agents, flame retardant additives and mixtures thereof.

6. The method of claim 1, wherein the temperature is equal to or greater than the Vicat softening temperature of the thermoplastic resin.

7. The method of claim 1, wherein the compressing is carried out by compressing the first particles against a perforated mold and wherein the aggregate is extruded through the perforations of the mold.

8. The method of claim 1, wherein the compressing is carried out using a press-extrusion apparatus, said apparatus comprising:
a rotatably mounted mold comprising a cylindrical wall extending along a first longitudinal axis, said wall having a cylindrical inner surface, having a cylindrical outer surface radially spaced apart from the cylindrical inner surface and having one or more radially oriented passages or perforations communicating between the inner and outer surfaces;
means for rotating the mold about the first axis,
means for introducing thermoplastic resin particles into the mold,
one or more cylindrical mills, each mill extending along a respective longitudinal axis and having a respective cylindrical outer surface and wherein each mill is axially aligned with and rotatably mounted within the mold with the outer surface of the mill in close proximity to the inner surface of cylindrical wall of the mold, and
means for rotating each mill about its own axis, wherein the first particles are introduced into the mold and compressed between the outer surfaces of the mills and the inner surface of the wall of the mold and the aggregate is radially outwardly extruded from the mold through the one or more passages defined in the mold wall.

9. The method of claim 8, wherein the apparatus further comprises cutting means for contacting the aggregate to divide the aggregate into the second particles.

10. Thermoplastic resin pellets made by the method of claim 1.
